# EUROPEAN PATENT APPLICATION

(11) **EP 1 603 122 A2**
(43) Date of publication of application: **07.12.2005**
(21) Application number: 05000148.6
(22) Date of filing: 05.01.2005
(51) Int. Cl.: G11B 7/0065

(54) **Holographic ROM system having reflective data mask**

(30) Priority: 04.06.2004 KR 2004040779
(71) Applicant: Daewoo Electronics Corporation, Seoul (KR)
(72) Inventor: Moon, Jin Bae, Mapo-gu Seoul (KR)
(74) Representative: Jacoby, Georg

(57) **Abstract**

A holographic read-only memory (ROM) mastering system includes a conical mirror for refracting a reference beam to generate conical reference beams to be incident on a storage medium in a first angle; and a reflective data mask, having a data pattern for data to be recorded in the storage medium, for modulating and reflecting some of the conical reference beams passing through the storage medium to generate modulated conical reference beams to be incident on the storage medium in a second angle. The modulated conical reference beams are interfered with the conical reference beams incident on the storage medium, to thereby record an interference pattern based on the interfering operation in the storage medium. The first and the second angles have a relationship of a complementary angle with respect to the vertical direction of the storage medium.

## Description

The present invention relates to a holographic Read-Only Memory (ROM) system, and more particularly to a holographic ROM system capable of recording holographic data in a holographic medium without interference noise using a reflective data mask and reproducing holographic data recorded in the holographic storage medium, and a method for therefor.

With the development of information industry, a large capacity storage device and data processing in high speed are required. Of devices for storing digital data, widely known holographic Read Only Memory (ROM) system is a page-oriented memory system using the principle of volume holograms and is capable of storing a large volume of information on a holographic storage medium. The holographic ROM system allows a signal beam having information therein to interfere with a reference beam to generate an interference pattern to be stored in the holographic storage medium. Moreover, the holographic ROM system has a capability of superposedly storing more data on a page basis in a single holographic storage medium by employing an angle multiplexing in which the incident angle of the reference beam to the storage medium is changed. Due to these advantages, the holographic ROM system attracts attention as a future high density optical storage device.

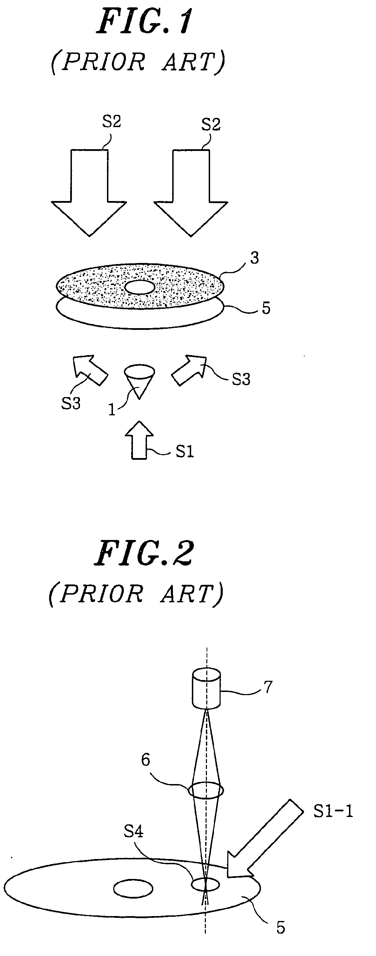

Fig. 1 shows a schematic diagram of a typical holographic ROM mastering system for recording holographic data in a holographic storage medium. In the holographic ROM mastering system, reference beams S1 and signal beams S2 are derived from an optical system including an optical source (not shown). A conical mirror 1 refracts the reference beams S1 to control the incident angle of the reference beams S1 to be incident on the holographic storage medium 5, to thereby produce conical reference beams S3 with a controlled incident angle. The conical reference beams S3 are incident on a holographic storage medium 5 and are interfered with the signal beams S2 passing through a transmissive data mask 3 presenting a predetermined data pattern to be recorded in the holographic storage medium 5, to thereby produce an interference pattern. The interference pattern is recorded in the storage medium 5 as the holographic data.

By employing angle multiplexing, more data can be superposedly stored in the holographic medium 5. To do this, after recording the holographic data once, the conical mirror 1 is replaced with another one, e.g., a second conical mirror (not shown) and the transmissive data mask 3 is also changed with another one, e.g., a second data mask (not shown).

The second conical mirror produces second conical beams which are incident on the storage medium 5 in a different incident angle from that of the conical reference beams S3. Similarly, the second data mask has a different data pattern from that of the data mask 3 to produce second signal beams. The second conical reference beams and the second signal beams are interfered with each other and a second interference pattern generated thereby is superposed in the storage medium 5. A maximum value of changeable incident angle is determined by angle selectivity (i.e., a thickness of the storage medium, a wave length of the reference beam and sin θ, where e is the incident angle of the reference beams to the holographic storage medium).

Meanwhile, a holographic ROM reading system as shown in Fig. 2 is employed to reproduce the holographic data recorded in the holographic storage medium 5 using the holographic mastering system as shown in Fig. 1. In order that the holographic ROM reading system reproduces holographic data recorded in the storage medium 5, only a plane-wave readout beam S1-1, which is a kind of reference beam S1, is employed to radiate the storage medium 5. Then, a real image S4 is reproduced in the vertical direction of the storage medium 5. The real image S4 is picked up by a pick-up lens 6 and then is detected by a detector 7, to thereby enable to read out data reproduced from the storage medium 5. In this case, the plane-wave readout beam S1-1 is radiated to the storage medium 5 in an angle which is the same as the controlled incident angle of the conical reference beam S3 as described above. Similarly, the angle of the plane-wave readout beam is changed with the incident angles of the conical reference beams as described with reference to Fig. 1, to thereby reproduce the data superposedly recorded in the storage medium 5.

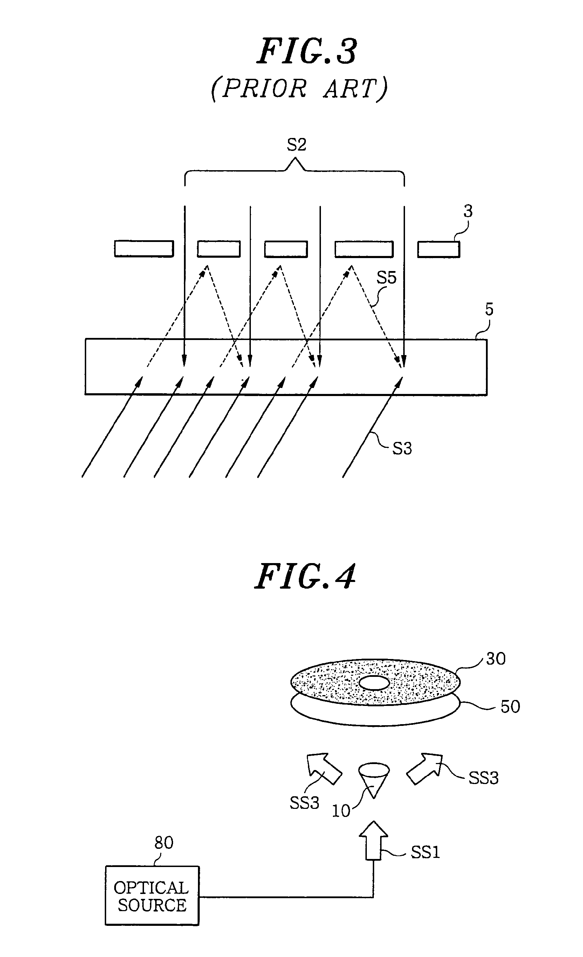

However, when the holographic ROM mastering system records the holographic data in the storage medium 5, as shown in Fig. 3, some of the conical reference beams S3 pass through the storage medium 5 and then are reflected in the transmissive data mask 3 to be made a reflected conical reference beam S5. The reflected conical reference beams S5 are incident on the storage medium 5 and are interfered with the signal beams S2 along with the conical reference beams S3 to produce an interference pattern. Accordingly, the prior art holographic ROM mastering system has disadvantages in that interference noises caused by being interfered the undesired reflected conical reference beams S5 with the signal beams S2 is also recorded in the storage medium 5.

It is, therefore, an object of the present invention to provide a holographic ROM system capable of recording holographic data in a storage medium without interference noise and reproducing holographic data recorded in the storage medium, and a method therefor.

In accordance with one aspect of the present invention, there is provided a holographic read-only memory (ROM) mastering system recording holographic data in a storage medium, including: means for generating a reference beam; a conical mirror for refracting the reference beam to generate conical reference beams to be incident on the storage medium in a first angle; and a reflective data mask, having a data pattern for data to be recorded in the storage medium, for modulating and reflecting some of the conical reference beams passing through the storage medium to generate modulated conical reference beams to be incident on the storage medium in a second angle, wherein the modulated conical reference beams are interfered with the conical reference beams incident on the storage medium, to thereby record an interference pattern based on the interfering operation in the storage medium.

In accordance with another aspect of the present invention, there is provided a holographic read-only memory (ROM) reading system for reproducing holographic data recorded in a storage medium, including: means for providing a plane-wave readout beam in a first angle to scan the storage medium, to thereby reproduce a real image from the storage medium; image forming means for forming the real image thereon, the image forming means being aligned on an optical path deflected by a second angle with respect to the vertical direction of the storage medium; and detection means, aligned on the optical path and spaced apart from the image forming means with a predetermined distance, for detecting the real image, to thereby read out the holographic data.

The above and other objects and features of the present invention will become apparent from the following description of preferred embodiments given in conjunction with the accompanying drawings, in which:
Fig. 1 is a view illustrating a process for recording holographic data in a storage medium by interfering a reference beam and a signal beam which are traveling in opposite directions in a prior art holographic ROM mastering system;
Fig. 2 is a view illustrating a process for reproducing holographic data recorded on a storage medium in a prior art holographic ROM reading system;
Fig. 3 is a view illustrating a process that some of reference beams are interfered with signal beams reflected from a transmissive data mask of Fig. 1;
Fig. 4 is a schematic diagram of a holographic ROM mastering system for recording holographic data in a storage medium using a reflective data mask in accordance with the present invention;
Fig. 5 is a view illustrating the interference of signal beams generated by the reflective data mask shown in Fig. 4 with reference beams;
Fig. 6 is a schematic diagram of a holographic ROM reading system reproducing holographic data recorded in a storage medium in accordance with the present invention;
Fig. 7 is a flow chart describing a method for recording data in a storage medium using a holographic ROM mastering system according to the present invention; and
Fig. 8 is a flow chart describing a method for reproducing data recorded in a recoding medium using a holographic ROM reading system according to the present invention.

Preferred embodiments of the present invention will now be described with reference to the accompanying drawings, wherein like reference numerals represent like or corresponding parts in various drawings.

Fig. 4 is a schematic diagram of a holographic ROM mastering system recording holographic data in a holographic storage medium in accordance with the present invention, and more specifically, is a view illustrating a procedure for recording holographic data in the storage medium using the holographic ROM mastering system. As shown in Fig. 4, the holographic ROM mastering system of the present invention comprises a light source 80, a disk-shaped holographic storage medium 50, a reflective data mask 30 and a conical mirror 10.

The light source 80 is implemented with a laser generating a reference beam SS1 with wavelength, for example, 532nm. The reference beam SS1 generated from the light source 80 is directly incident on the conical mirror 10.

The conical mirror 10 is of a circular cone having a circular base with a preset base angle between the circular base and the circular cone to control the incident angle of the reference beam SS1 to be incident on the storage medium 50. Such conical mirror 10 refracts the reference beam SS1 to generate conical reference beams SS3. The conical reference beams SS3 are incident on the storage medium 50 in a first angle θ by the conical mirror 10. At this time, some of the conical reference beams SS3 pass through the storage medium 50 to be incident on the reflective data mask 30.

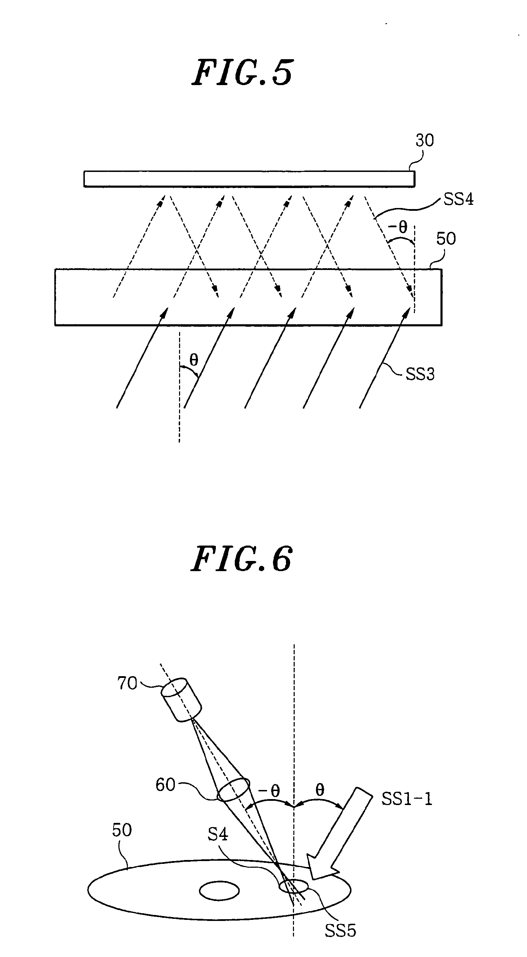

The reflective data mask 30 is aligned on the storage medium 50 spaced apart therefrom with a predetermined distance and is shaped similar to the storage medium 50. Such reflective data mask 30 has a predetermined data pattern for data to be recorded in the storage medium 50 and functions as a reflective spatial light modulator (SLM). The reflective data mask 30 modulates the conical reference beams SS3, which pass through the storage medium 50, by the data pattern thereof and reflects the conical reference beams modulated by the data pattern in a second angle -θ. The conical reference beams modulated and reflected by the reflective data mask 30 are incident in the second angle -θ on the storage medium 50 as a signal beam SS4. As shown in Fig. 5, the second angle -θ is a complementary angle of the first angel θ with respect to the vertical direction of the storage medium 50.

Then the signal beams SS4 are interfered with the conical reference beams SS3 incident on the storage medium 50 and an interference pattern based on the interfering operation is recorded as holographic data in the storage medium 5.

Accordingly, the holographic ROM mastering system according to the present invention is capable of recording holographic data without an interference noise by employing the reflective data mask 30. Further, the holographic ROM mastering system according to the present invention can simplify the structure of an optical system thereof since it derives the signal beams from the reference beams using the reflective data mask 30 without employing an additional optical system for generating the signal beams.

Further, in order to record more data in the same holographic storage medium 5 by using angle multiplexing, the conical mirror 10 and the data mask 30 should be substituted with another conical mirror and another data mask after recording the holographic data. Accordingly, both the first and the second angles are also changed as much as angle selectivity (i.e., a thickness of the storage medium, a wavelength of the reference beams, and sin θ, where θ is the incident angle of the reference beams to the holographic storage medium).

Fig. 6 is a schematic diagram of a holographic ROM reading system reproducing holographic data recorded in a storage medium in accordance with the present invention, and more specifically, is a view illustrating a procedure for reproducing holographic data recorded in the storage medium using the holographic ROM mastering system as shown in Figs. 4 and 5.

As shown in Fig. 6, the holographic ROM reading system includes a pick-up lens 60 and a photo-detector 70. Further, although it is not specifically shown in Fig. 6, the holographic ROM reading system further includes a driving mechanism for rotating a disk-shaped holographic storage medium 50 and an optical source for generating a laser beam such as a plane-wave readout beam SS1-1, which is a kind of a reference beam. The plane-wave readout beam SS1-1 is incident in a first angle θ on the holographic storage medium 50 being rotated by the driving mechanism. The first angle θ is identical to that of the conical reference beam SS3 used when holographic data is recorded in the storage medium 50 as shown in Fig. 4.

The pick-up lens 60 and the photo-detector 70 are aligned on an optical path which is deflected by a second angle -θ which is a complementary angle of the first angle θ with respect to the vertical direction of the storage medium 50.

The photo-detector 70 is spaced apart from the pick-up lens 60 with a predetermined distance to receive an image picked up by the pick-up lens 60, to thereby read out the holographic data from the storage medium 50.

In order to reproduce holographic data recorded in the holographic storage medium 50 being rotated, the plane-wave readout beam SS1-1 is incident on the holographic storage medium 50 in a first angle θ to scan data tracks of the storage medium 50.

By scanning the data tracks of the storage medium through the use of the plane-wave readout beam SS1-1, the real image SS5 is reproduced from the storage medium 50 while being deflected by the second angle -θ1 with respect to the vertical direction of the storage medium 50, instead of being reproduced in the vertical direction of the storage medium 50. Such real image SS5 is incident on the pick-up lens 60.

The pick-up lens 60 picks up the real image SS5 to make an image formation thereon. And then the real image SS5 being image formed is detected by the photo-detector 70, to thereby read out the data recorded in the storage medium 50.

If it is desired to reproduce another data superposedly recorded in the storage medium 50, the first angle θ of the plane-wave readout beam SS1-1 should be changed as much as the angle selectivity, and the second angle -θ of the optical path should also be changed accordingly.

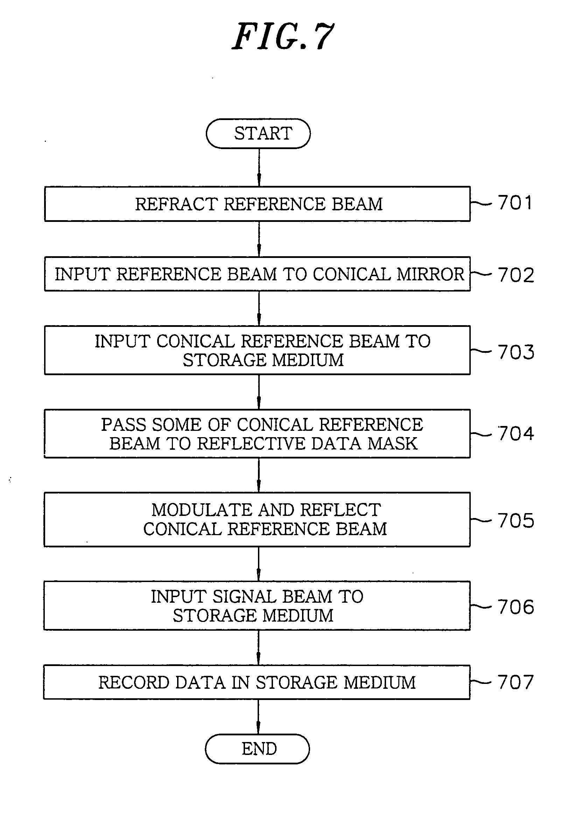

Fig. 7 is a flow chart describing a method for recording holographic data in a holographic storage medium using a holographic ROM mastering system shown in Fig. 4.

The reference beam SS1 generated from the optical source 80 is incident on the conical mirror 10 in step 701.

The conical mirror 10 refracts the reference beam SS1 to produce the conical reference beams SS3 in step 702.

The conical reference beams SS3 are incident on the holographic storage medium 50 in step 703.

Meanwhile, some of the conical reference beams SS3 pass through the storage medium 50 to be incident on the reflective data mask 30 in step 704.

In the reflective data mask 70, the conical reference beams SS3 is modulated and reflected in step 705 to thereby form the signal beams SS4 in step 705.

The signal beams SS4 are propagated toward the storage medium in step 706.

Thereafter, the conical reference beams SS3 and the signal beams SS4 are interfered with each other. Accordingly, data of the reflective data mask 30 is recorded in the storage medium in step 707.

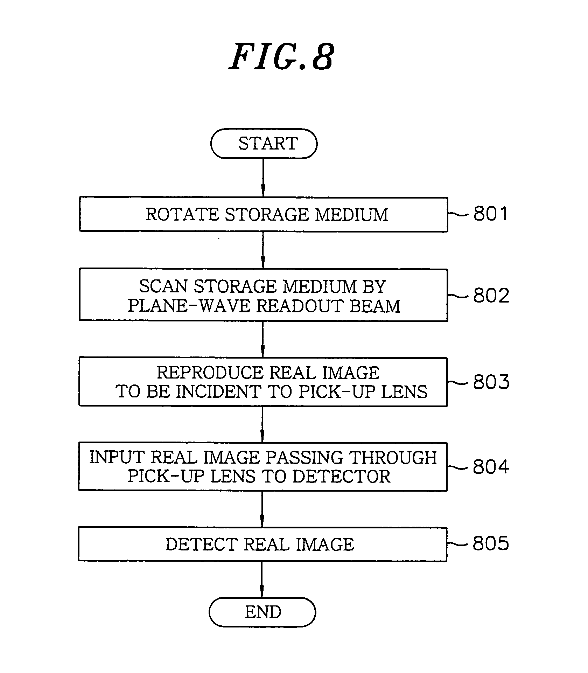

Fig. 8 is a flow chart describing a method for reproducing holographic data recorded in the storage medium using a holographic ROM mastering system shown in Fig. 6.

First, the storage medium 50 is rotated by the driving mechanism in step 801 and the plane-wave readout beam SS1-1 is incident on the storage medium 50 to scan it in step 802.

After that, a real image SS5 is reproduced from the storage medium 50 and is then incident on the pick-up lens 60 in step 803.

Such real image SS5 is picked up by the pick-up lens 60 and is then provided to the photo-detector 70 in step 804.

The real image SS5 from the pick-up lens 60 is detected by the photo-detector 70 in step 805, to thereby read out the holographic data from the storage medium 50.

While the invention has been shown and described with respect to the preferred embodiments, it will be understood by those skilled in the art that various changes and modifications may be made without departing from the scope of the invention as defined in the following claims.

## Claims

1. A holographic read-only memory (ROM) mastering system recording holographic data in storage medium, comprising:
means for generating a reference beam;
a conical mirror for refracting the reference beam to generate conical reference beams to be incident on the storage medium in a first angle; and
a reflective data mask, having a data pattern for data to be recorded in the storage medium, for modulating and reflecting some of the conical reference beams passing through the storage medium to generate modulated conical reference beams to be incident on the storage medium in a second angle,
wherein the modulated conical reference beams are interfered with the conical reference beams incident on the storage medium, to thereby record an interference pattern based on the interfering operation in the storage medium.

2. The holographic ROM mastering system according to claim 1, wherein the first angle and the second angle have a relationship of a complementary angle with respect to the vertical direction of the storage medium.

3. The holographic ROM mastering system according to claim 1, wherein the modulated conical reference beams are used as signal beams accompanying the data.

4. The holographic ROM mastering system according to claim 2, wherein the first and the second angles are changed as much as angle selectivity for angle multiplexing.

5. The holographic ROM mastering system according to claim 4, wherein the angle selectivity is determined by a thickness of the storage medium, a wavelength of the reference beam and a sin θ, where 8 is the first angle.

6. A holographic read-only memory (ROM) reading system reproducing holographic data recorded in a holographic storage medium, comprising:
means for providing a plane-wave readout beam in a first angle to scan the storage medium, to thereby reproduce a real image from the storage medium;
image forming means for forming the real image thereon, the image forming means being aligned on an optical path deflected by a second angle with respect to the vertical direction of the storage medium; and
detection means, aligned on the optical path and spaced apart from the image forming means with a predetermined distance, for detecting the real image, to thereby read out the holographic data.

7. The holographic ROM reading system according to claim 6,
wherein the first and the second angle have a relationship of a complementary angle with respect to the vertical direction of the storage medium and are identical to an incident angle of reference beams used when the holographic data is recorded in the storage medium.

8. The holographic ROM reading system according to claim 7,
wherein both of the first and the second angles are changed as much as angle selectivity for angle multiplexing.

9. The holographic ROM reading system according to claim 8,
wherein the angle selectivity is determined by the thickness of the storage medium, the wavelength of the reference beams, and a sin θ, where θ is the first angle.

10. A method for recording holographic data in a storage medium using a holographic read-only memory (ROM) mastering system, comprising the steps of:
refracting a reference beam by a conical mirror to produce conical reference beams to be incident on the storage medium in a first angle;
modulating some of the conical reference beams passing through the storage medium and reflecting them to produce modulated conical reference beams to be incident on the storage medium in a second angle; and
recording an interference pattern generated by interfering the modulated conical reference beams and the conical reference beams with each other on the storage medium.

11. The method according to claim 10, wherein the first angle and the second angle have a relationship of a complementary angle with respect to the vertical direction of the storage medium.

12. A method for reproducing holographic data from a storage medium using a holographic read-only memory (ROM) reading system, comprising the steps of:
scanning the storage medium using a plane-wave readout beam in a first angle, to thereby reproduce a real image from the storage medium;
image forming the real image on an optical path deflected by a second angle with respective to the vertical direction of the storage medium; and
detecting the image formed on the optical path, to thereby read out the holographic data.

13. The method according to claim 12, wherein the first angel and the second angle have a relationship of a complementary angle with respect to the vertical direction of the storage medium and are identical to that of reference beams used when the holographic data is recorded in the storage medium.
